# EUROPEAN PATENT APPLICATION

(11) **EP 1 445 527 A1**
(43) Date of publication of application: **11.08.2004**
(21) Application number: 04100478.9
(22) Date of filing: 09.02.2004
(51) Int. Cl.: F16L 33/22, F16L 47/22

(54) **Connecting structure for a thermoplastic tube, integrated assembly and connecting method therefor**

(30) Priority: 07.02.2003 JP 2003031786
(71) Applicant: Tokai Rubber Industries, Ltd., Komaki-shi, Aichi-ken, 485-8550 (JP)
(72) Inventor: Katayama, Kazutaka, 486-0801, Aichi-ken (JP); Takayanagi, Akira, 481-0001, Aichi-ken (JP)
(74) Representative: Poulin, Gérard

(57) **Abstract**

A connecting structure and method for affixing an open end of a tube (75) composed from thermoplastic resin material(s) to a tube connecting portion (7) of a quick connector (1) having a cylindrical geometry and at least one annular stopper (15,27,29) on the cylindrical outer circumference (13) thereof with said tube connecting portion (7) being adapted to be press fitted into said open end of said resin tube (75). The connecting structure comprises; an annular band (79) composed of elastomeric rubber which surrounds the open end of said resin tube (75) adjacent the location of attachment to said quick connector (1) having a length at least about equal to the diameter of the cylindrical outer circumference (13) of the quick connector (1) and a diameter such that a tightening force is applied to the resin tube (75) upon press fitting said tube connecting portion (7) into the open end of said resin tube (75) to prevent disengagement therefrom. The connecting structure forms an integrated assembly with the tube connecting portion (7) of the quick connector (1).

## Description

### TECHNICAL FIELD

The present invention relates to a connecting structure for connecting a thermoplastic tube to fluid tube connector, an integrated assembly and method for connecting a resin tube to a fluid tube connector to provide piping for transmitting fluids in an automobile, home water heating systems, or for general industrial purposes.

### BACKGROUND OF THE INVENTION

Automotive fuel tubes, for example, use a rubber hose which is flexible and can be freely bent for connection to a quick connector without relative displacement. Nonetheless a rubber hose is too heavy and is not manageable for this application. It would be preferable to use a resin tube and to connect the resin tube to another tubular body utilizing a quick connector as the coupling joint for fluid delivery therethrough. A quick connector has a tube connecting portion with a cylindrical outer circumference at one end and a retainer means on the other end. The tube connecting portion has an annular stopper adapted for connection to one end of the hose.

A thick resin tube by itself is not suitable to form a simple connecting structure for use with a quick connector since the only force fitting the resin tube to the tube connecting portion of a quick connector is the stress from the thick resin tube pushing against the tube connecting portion of the quick connector. This stress is not strong enough to hold the resin tube against the force working to pull it out of the tube connecting portion during fluid delivery.

In the plumbing of radiators or water heating systems, a typical resin tube will require a large diameter to permit the flow of a high pressure fluid or a high temperature fluid. This will promote or gener ate creep at the resin tube's connecting end which cancels the tightening force at the connecting end causing the resin tube to fall off easily. Further tightening of the resin tube at the end of the tube connecting portion does not help the resin tube and/or the tube connecting portion to resist the internal high pressure. A tube composed of resin material is therefore not currently desirable for use in the plumbing of radiator and/or heating systems.

In addition to the plumbing in heating systems, tubes extending from an engine or boiler room which for example, branch into a heater core at the front or rear end utilize a multi-way joint. A resin tube would also provides an unreliable connection for use with a quick connector in these applications as well.

A known technology for connecting a resin tube to a quick connector is taught in Unexamined Japanese Patent Publication No. 2001-343092 in which the quick connector is bonded to the edge of a resin tube by over injection. To strongly bond a quick connector to a resin tube, the quick connector and resin tube should be made of the same material. Moreover, a resin tube is composed typically of multiple layers with its edge exposing each of the layers. As a result, the over all edge of the resin tube does not bond well to the connector, causing the connector to break or crack at the edge of the resin tube. For example, a resin tube, which is constructed with an outer layer made of heat resistant Nylon 12 (PA 12) and an inner layer made of water resistant polypropylene (PP), polyolefin, or fluororesin, has a drawback in that the inner layer does not completely bond to a connector made of Nylon 12 (PG 12 GF) containing glass fiber. Therefore, many configurations of this type do not provide a reliable connecting structure for a resin tube.

Another known technology for enhancing the engaging force between a resin tube and a quick connector is taught in Unexamined Japanese Patent Publication No. H04 - 248095 wherein a male screw portion is formed around the outer circumference of a tube connecting portion of a quick connector for insertion into a connecting end of a resin tube over which is fitted a sealing ring ( e.g. o - ring); screwing the o-ring into the male screw portion and tightening the tube connecting portion.

Alternately, there is another known technology in which a rubber protector is coated on the outer circumference of a resin tube and the tube connecting portion of a quick connector is press fitted into the resin tube as taught in Unexamined Japanese Pat ent Publication No. H11-280958. This configuration will also enhance the engaging force that prevents the resin tube from disintegration and enhances sealing between a resin tube and a connector.

### PROBLEMS WITH THE PRIOR ART SOLUTIONS

The configuration in which a male screw portion is formed on the outer circumference of a tube connecting portion in combination with the use of an o-ring requires the tube connecting portion of the quick connector to be thin causing the resin tube connecting structure to have poor reliability. The configuration using a rubber protector coating involves coating the entire resin tube for the purpose of enhancing the heat resistance and fire resistance of the resin tube. This may adversely affect the light weight merit of the resin tube, particularly for a resin tube of large diameter and increases the cost of manufacturing the resin tube.

The present invention provides a connecting structure for connecting a light weight resin tube to a quick connector with excellent disintegration resistance and consistent sealing performance, and can be manufactured cost effectively. The present invention also provides a method of connecting a light weight resin tube to a quick connector in a cost effective manner.

### SUMMARY OF THE INVENTION

One embodiment of the present invention is a connecting structure for affixing an open end of a thermoplastic tubular body (resin tube) to a tube connecting portion of a quick connector having a cylindrical geometry and at least one annular stopper on the cylindrical outer circumference thereof with said tube connecting portion adapted to be press fitted into the open end of said resin tube; said connecting structure comprising : an annular band composed of elastomeric rubber surrounding the open end of the re sin tube adjacent the location of attachment to said quick connector, with the annular rubber band having a length equal to about at least the diameter of said cylindrical outer circumference and a diameter such that a tightening force is applied to said resin tube upon press fitting said tube connecting portion into the open end of said resin tube to prevent disengagement therefrom and with said annular rubber band being formed of at least a plurality of elastomeric rubber layers.

The annular rubber band should preferably be arranged with one end thereof positioned adjacent the open end of the resin tube into which the tube connecting portion is press fitted to form an exposed free end of resin tube. Moreover, it is preferred for the annular rubber band to be of a length such that the opposite end thereof extends longitudinally beyond the end of the tube connecting portion upon being press fitted into said resin tube.

The annular rubber band may be made of a vulcanized rubber or may be injection molded or extrusion molded utilizing a thermoplastic elastomer with good heat resistance and may be formed by slicing a section from a cylindrical tubular body of such composition. The annular rubber band does not contact the fluid inside the pipe. Further, the annular rubber band is fitted over the resin tube and configured to tighten around the open end of the resin tube when the tube connecting portion of a quick connector is inserted therein thereby preventing the resin tube from disintegration. The annular rubbe r band may have an inner diameter which is equal to or nearly equal to the outer diameter of the resin tube before the tube connecting portion of the quick connector is press fitted therein and should preferably be longer in length than the outer diameter of the connecting portion of the quick connector by about 2.0 mm or more. The annular rubber band thus tightens the resin tube when the tube connecting portion is inserted therein and increases the engaging force between the resin tube and the tube connecting portion. The stress or pressing force of the annular rubber band does not decrease at a high temperature and/or high pressure even though a fluid at high temperature flows through the resin tube and the tightening force does not mitigate at the connect ing end of the resin tube. The connecting structure is adaptable to a resin tube having an inner diameter in a wide range of between 6.0 - 40 mm and a thickness of 0.5 - 4.0 mm.

Another embodiment of the present invention is an integrated assembly comprising :
a fluid tube connector having a tube connecting portion of cylindrical geometry and an annular stopper on the cylindrical outer circumference thereof; a thermoplastic resin tube, having an open end through which the tube connecting portion of said fluid tube connector is press fitted to form a tight coupling; and an annular rubber band fitted to the outer circumference of the open end of said resin tube, said annular rubber band having a length equal to at least the diameter of said cylindrical outer circumference and a diameter such that a tightening force is applied to said resin tube adjacent at the open end into which said tube connecting portion has been press fitting to prevent disengagement therefrom.

To further ensure adequate tightening and accurate sealing of the connecting structure, the outer circumference of the annular rubber band may be further tightened by a clamping means. It is also desirable for the annular rubber band to include a reinforcing layer made of reinforcing threads or a canvas cloth to maintain a good tightening force on the tube connecting portion of the quick connector.

Yet another embodiment of the present invention is a method for connecting an open end of a resin tube to one end of a tube connecting portion of a quic k connector having a cylindrical geometry and an annular stopper on the cylindrical outer circumference thereof, comprising the steps of: inserting the tube connecting portion into the open end of said resin tube to form a tight coupling; and placing an annular rubber band over said resin tube at said open end thereof for tightening said coupling with said annular rubber band having a length equal to at least the diameter of the cylindrical outer circumference and a diameter such that a tightening force is applied to the resin tube at the press fitted end to prevent disengagement.

The present invention also provides a method of connecting a resin tube to a tube connecting portion of a quick connector having an annular stopper on the cylindrical outer circumference thereof such that one end of the resin tube tightly engages the tube connecting portion comprising the steps of: fitting an annular rubber band on an open end of the resin tube representing the connecting end of said rein tube; enlarging the open end with the annular band fitted thereon; heat softening the connecting end of the resin tube and press fitting the tube connecting portion of the quick connector into the connecting end of the resin tube. The connecting end of the resin tube may have an inner diameter which is about equal to or smaller than the outer diameter of the tube connecting portion before enlargement. The tube connecting portion should preferably be press fitted into the connecting end of the resin tube while the open end thereof is being enlarged. Enlargement of the open end of the resin tube will also enlarge the annular rubber band at the end thereof adjacent the connecting end of the resin tube. Thereafter upon releasing the force applied to enlarge the open end of the resin tub e the annular rubber band may shrink. Preferably, the tube connecting portion is quickly press fitted into the connecting end of the resin tube as soon as the force enlarging the open end of the resin tube is released. However, when the force applied to enlarge the open end of the resin tube is released during press fitting the shrinking rate at the open end may be too fast to correctly press fit the tube connecting portion into the resin tube. For this reason it is desirable that the annular rubber band be positioned with one end thereof slightly displaced from the open end of the resin tube to leave a short portion of resin tube exposed , i.e. to form an exposed free end of resin tube relatively small in length. Moreover, it is also preferred that the annular rubber band be of a length such that the end thereof opposite the open end of the resin tube extend longitudinally beyond the end of the tube connecting portion after being press fitted into said resin tube.

Moreover, it is also desirable for the open end of the resin tube to be enlarged such that the inner diameter thereof becomes 5% - 20% larger than the outer diameter of the tube connecting portion before or during press fitting to prevent any entrapment of the annular stopper within the resin tube.

If the tube connecting portion of the quick connector is first press fitted into the connecting end of the resin tube, a flow of high temperature fluid into the resin tube and quick connector, this will heat soften the connecting end of the resin tube. The high temperature fluid may be any fluid that flows under normal conditions. The softened connecting end of the resin tube will cause the resin tube to conform to the outer circumference of the tube connecting portion under the tightening force of the rubber band over a period of time, i.e. gradually.

To facilitate press fitting the tube connecting portion should have guiding tapered surface at the longitudinal end thereof. The guiding portion may have an outer diameter which is about equal to or somewhat larger than the inner diameter of the open connecting end of the resin tube. As a result, enlargement of the connecting end of the resin tube begins upon entry of the tapered surface. A large differential elasticity is thus generated on the resin tube at the border defined by the longitudinal end of the tube connecting portion. Any longitudinal vibration or displacement of the resin tube relative to the tube connecting portion causes shifting of the tube connecting portion to centralize stress. Abrasion may also result thereby wearing out the resin tube and the tube connecting portion. For this reason the longitudinal tip of the rubber band should be spaced apart from the longitudinal end of the tube connecting portion to prevent the tip of the tube conne cting portion from being displaced upon entry into the resin tube. It is effective that the longitudinal tip of the rubber band be designed to contact or push the enlarged connecting end of the resin tube.

The connecting structure of the resin tube, integrated assembly and the method of the present invention find their applications in piping for automotive fuels, radiators, heating systems or air conditioning systems. They can also be applied to piping of home water heating systems or a personal hygiene wa ter injection system. For these applications the fluid tube connector (e.g. connector housing or multi-way joint) be made of fluororesin including PA 6, PA 66, poly(phenylenesulfide) (PPS), aromatic Nylon, poly(vinylidenfluoride), and the like, or glass fi ber reinforced resin including denatured poly(phenylene ether) (denatured PPE) and acrylonitrile - butadiene - styrene (ABS). Alternatively, the fluid tube connector can be made of metallic materials such as stainless steel, aluminum alloy, or copper as well. The resin tube may be compressed of a single layer member of PA, polyolefin, polyester, liquid polymer, or fluororesin such as PVDF, perfluoroalkoxyalkane (PFA), poly (ethylenetetrafluoride) (ETFE) and the like. Alternately, the resin tube may be a member having multiple layers each made of the above materials.

The connecting structure for the resin tube, integrated assembly and the method of connecting a resin tube to a fluid tube connector further find their applications in piping for fuel cell cooling, pure water supply, air conditioning, and hydrogen supply. It is desirable that a fluid tube connector for these applications be made of a material whose impurities barely dissolve into water such as stainless, aluminum alloy, PPS, polyethersulfone (PES), polysulfone (PSU), PVDF, polycycloolefin, denatured PPE, or polyetherethylketone (PEEK) and the like. The resin tube may also be a single layer of a material whose impurities barely dissolve into water. Examples of such materials include polyolefin, PPS, polycycloolefin, denatured PPE, PEEK or fluororesin such as PVDF, PFA, ETFE, and the like. Alternately, the resin tube may have a layered structure comprising: an inner layer of any of the above materials; an outer layer of PA or polyolefin; and a middle layer of ethylene-vinyl alcohol copolymer (EVOH).

A rubber O-ring may be arranged inside the fluid tube connector of the quick connector. Any material may be appropriate for the O-ring. Nonetheless, desirable materials for use in gasoline piping are thos e that have low gasoline permeability including fluorinated rubber (FKM), which has a very low gasoline permeability, a copolymer of vinilydenefluoride, perfluoromethylvinylether, tetrafluoroethylene, and olefin bromide e.g. Viton GLT or GFLT: Viton, GLT, and GFLT, perfluoroelastomer, e.g. Kalrez: or fluorosilicone rubber (FVMQ). Effective materials for use in water systems are those that are waterproof and have a low extraction property. An example of such material is ethylene-propylene-diene monomer (EPDM) rubber. As for piping a hydrogen supply, the use of an O-ring made of butyl rubber (IIR) is desirable for its hydrogen barrier performance and low permeability. In this case, two EPDM O-rings should be attached to both longitudinal ends of IIPR O-rings.

### BRIEF DESCRIPTION OF THE DRAWINGS

Figure 1 is a perspective view of the quick connector in the integrated assembly of the present invention.

Figure 2 is a cross section of the quick connector of Figure 1.

Figure 3 is an enlarged diagram illustrating the tube connecting portion of the quick connector of Figure 1.

Figure 4 is a perspective view of the retainer in the quick connector of Figure 1.

Figure 5 is a cross section illustrating the tube body connected to the quick connector.

Figure 6 is a diagram illustrating how a resin tube is connected to the tube connecting portion of the quick connector.

Figure 7 is a diagram illustrating a first embodiment (Structure 1) of the resin tube integrated assembly according to the present invention.

Figure 8 is a diagram illustrating a second embodiment (Structure 2) of the resin tube integrated assembly according to the present invention.

Figure 9 is a diagram illustrating a third embodiment (Structure 3) of the resin tube integrated assembly according to the present invention.

Figure 10 is a diagram illustrating a fourth embodiment (Structure 4) of the resin tube integrated assembly according to the present invention.

Figure 11 is a diagram illustrating a fifth embodiment (Structure 5) of the resin tube integ rated assembly according to the present invention.

Figure 12 is a perspective view of a T -connector for connecting a plurality of resin tubes according to another embodiment of the present invention.

Figure 13 is a plan view illustrating the T - connector.

Figure 14 is a cross section illustrating a resin tube connecting structure of yet another embodiment of the present invention.

### DETAILED DESCRIPTION OF THE PREFERRED EMBODIMENTS

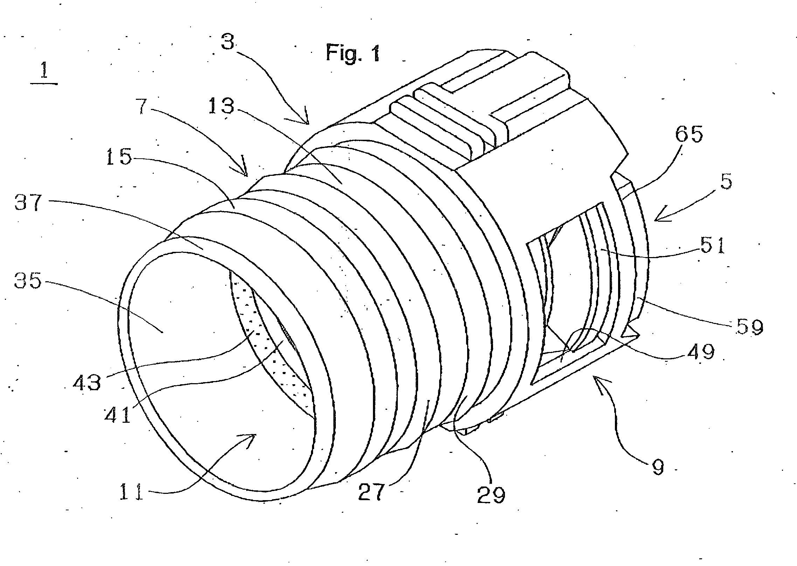

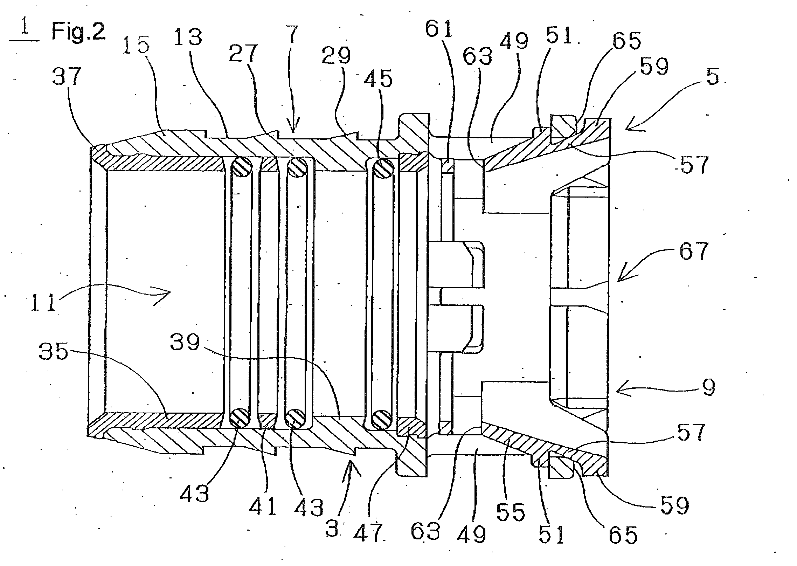

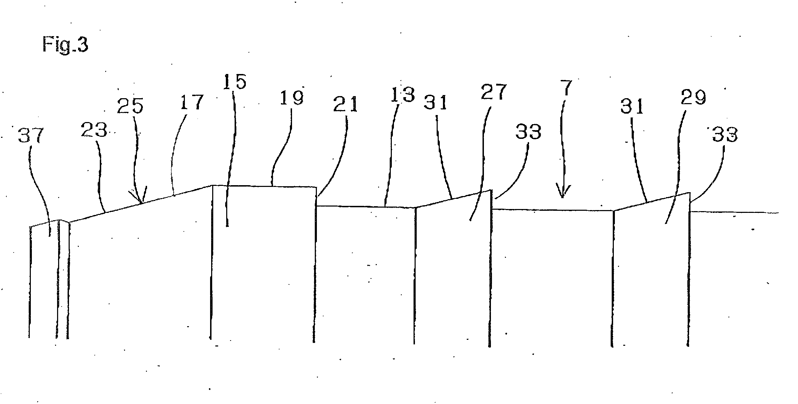

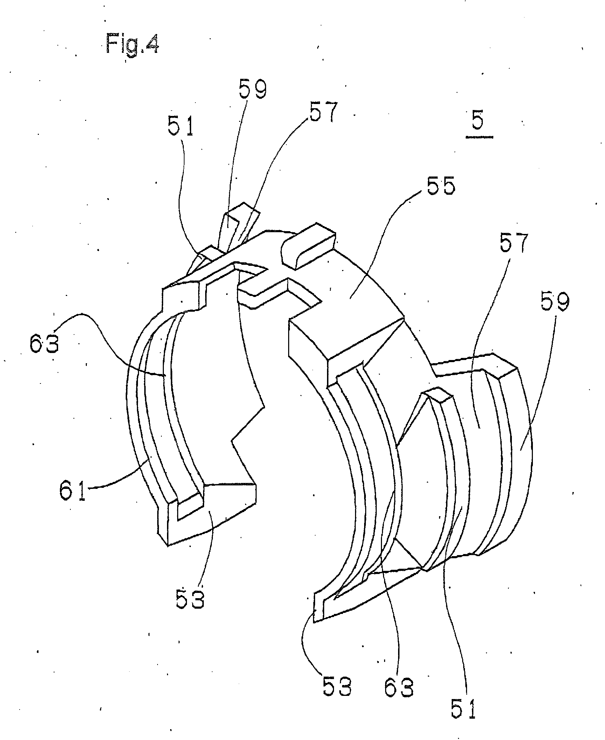

Figure 1 is a perspective view of a quick connector adapted to be connected to a resin tube in accordance with the present invention. Figure 2 is a cross section thereof. Figure 3 is an enlarged diagram illustrating the tube connecting portion of the quick connector of Figure 1. Figure 4 is a perspective view of a retainer adapte d to be connected to one end of the quick connector on the side opposite the tube connecting portion.

Quick connector 1 finds its use in connecting gasoline piping for automobiles and has a cylindrical connector housing 3 with an annular retainer 5 at one end thereof and a tube connecting portion 7 (hereafter "tube connector") at the opposite end.

Connector housing 3, being made of reinforced Nylon 12 (PA12GF30) containing 30 weight % glass fiber, is integrally formed with the tube connector 7 at the longitudinal end (hereinafter referred to as the "first end") of the housing 3 and a cylindrical retainer holder 9 at the other longitudinal end (hereinafter referred to as the "second end"). Connector housing 3 has a through hole 11 that originates at the first end (tip) and reaches the second (back) end.

Three annular stoppers are formed on cylindrical outer circumference 13 of tube connector 7. Each of the stoppers projects outwardly by the same height. As is illustrated in Figure 3, the outer surface of st opper 15 has a tapered surface 17, a level cylindrical surface 19, and a radial plane 21 transversely intersecting the level surface 19. The tapered surface 17 widens from the first end of cylindrical outer circumference 13 of tube connecting portion 7 toward the second end thereof. Cylindrical surface 19, which is a short extension from the second end of tapered surface 17 and radial plane 21, which extends or widens from the second end of cylindrical surface 19 to cylindrical outer surface 13 in a radial direction. Tapered surface 17 provides a guiding tapered surface 25 having a taper edge 23 which continuously widens from the first end toward the second end of tube connecting portion 7 at a constant angle along the tapered surface. The outer diameter of the first end of guiding tapered surface 25 is larger than that of cylindrical outer circumference 13 of tube connecting portion 7. One annular stopper 27 is located at a longitudinal mid point between annular stopper 15 and annular stopper 29. The annular stopper 27 and annular stopper 29 each have a tapered surface 31 and a radial surface 33 with the radial surface 33 of each receding abruptly to transversely intersect the cylindrical outer circumference 13 in a radial direction respectively.

As illustrated in Figure 1, cylindrical bushing 35 is fitted into the first end of the inner circumference of tube connecting portion 7. The second end 37 (tip) thereof projects from the first end of tube connection portion 7. The outer circumference of the first end 37 of cylindrical bushing 35 somewhat extends guiding tapered surface 25 of tube connecting portion 7 toward the first end (outer end) without interruption. The outer diameter of the first end is somewhat smaller than the second end of guiding tapered surface 25 thereof.

As illustrated in Figure 2, annular projection 39 is formed on the inner circumference of tube connecting portion 7. Between annular projection 37 and cylindrical bushing 35 are fitted, for example, a pair of O-rings made of FKM (hereinafter referred to as "FKM O-ring") with collar 41 therebetween. Another type, FVMQ O -ring 45 is fitted to the second end of annular projection 39 on the inner circumference of tube connecting portion 7; annular resin bushing 47 is fitted to the first end of the inner circumference of retainer holder 9, which is continuously formed on tube connecting portion 7 to prevent FVMQ O-ring 45 from sliding toward the second end.

Cylindrical retainer holder 9 having a diameter larger than the diameter of tube connecting portion 7 has engagement windows 49, 49 of the same structure arranged symmetrically in a radial direction.

PA retainer 5 is fitted into retainer holder 9. Retainer 5 has a "C" shaped body (cross section) 55 at points on the second end that are symmetric al in a radial direction, providing a space between circumferential edges 53 and 53 that allow relatively large deformation therein. A pair of arms 57, 57 are integrally formed with the second end of body 55 in such a manner that arms 57, 57 extend from the points corresponding to hooks 51, 51 toward the second end (outer end in the axial direction) at an angle in a radial direction. Operating edge 59, projecting outward in a radial direction, is provided at the second end of each arm 57. Engagement slits 6 3, 63 extend circumferentially in a facing manner at the first end (tip) 61 of body 55: retainer 5 constructed in the above manner has hook 51 to be inserted into engagement window 49 of retainer holder 9 to be locked therein; operating edge 59 is fitted to concavity 65 formed at the second end of retainer holder 9 to be locked therein as well. Hook 51 is then pushed from the second end opening 67 into retainer holder 9 to be further locked therein.

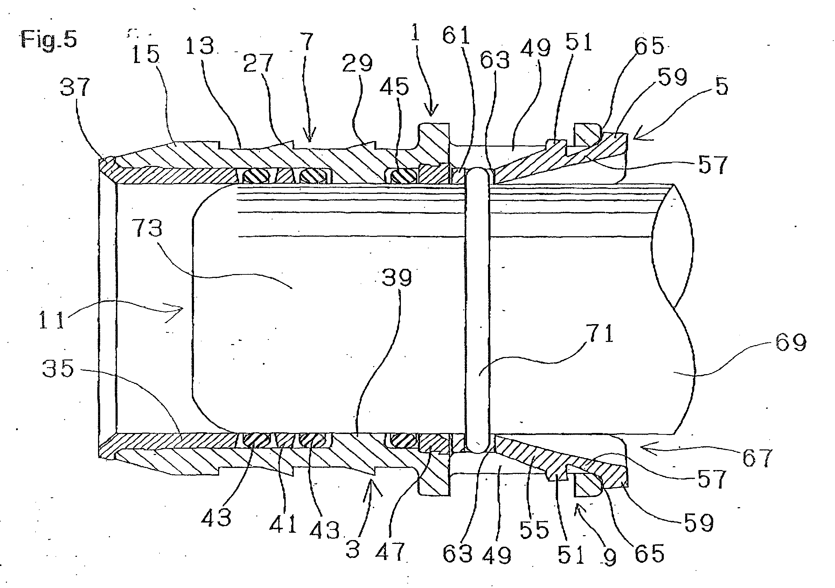

Figure 5 is a cross section illustrating the connection of a tube body 69 into quick connector 1 through the retainer holder 9 at one end of the quick connector.

The tube body 69 is inserted into the opening 67 of retainer holder 9, and more specifically from the operating end 59 and locked into retainer 5. The tube body 69 which may be made of a metallic material has an insertion edge 73 and an annular hook 71 at the first end of the outer circumference thereof. Annular hook 71 is pushed into quick connector 1 or connector housing 3 until it is snapped into slits 63, 63 of retainer 5, where the linkage between tube body 69 and quick connector is sealed by rubber O-rings 43, 45.

Tube connecting portion 7 of quick connector 1 is 32 mm long with an inner diameter of 29 mm (inner diameter of cylindrical bush 35 and annular hook 39): the largest diameter of annular stoppers 15, 27, 29 is set to 39 mm. The first end 37 of cylindrical bushing 35 extending tube connecting portion 7 toward the first end is 3.0 mm long.

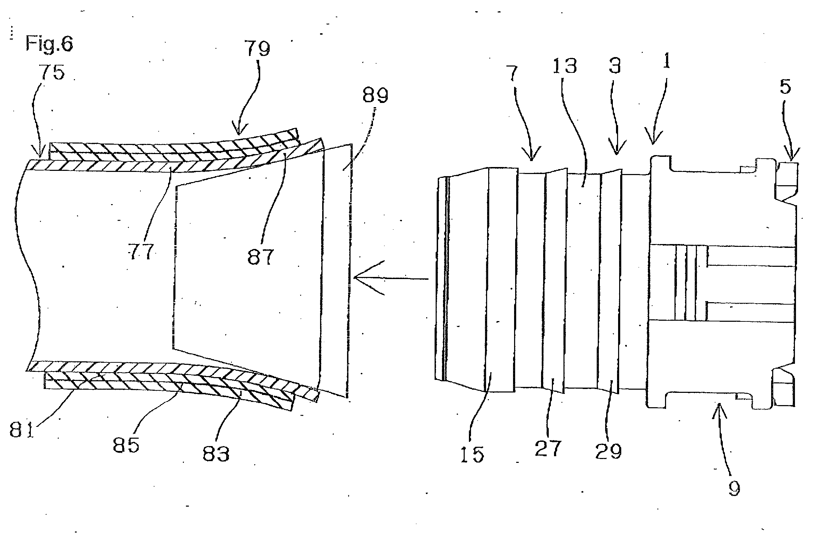

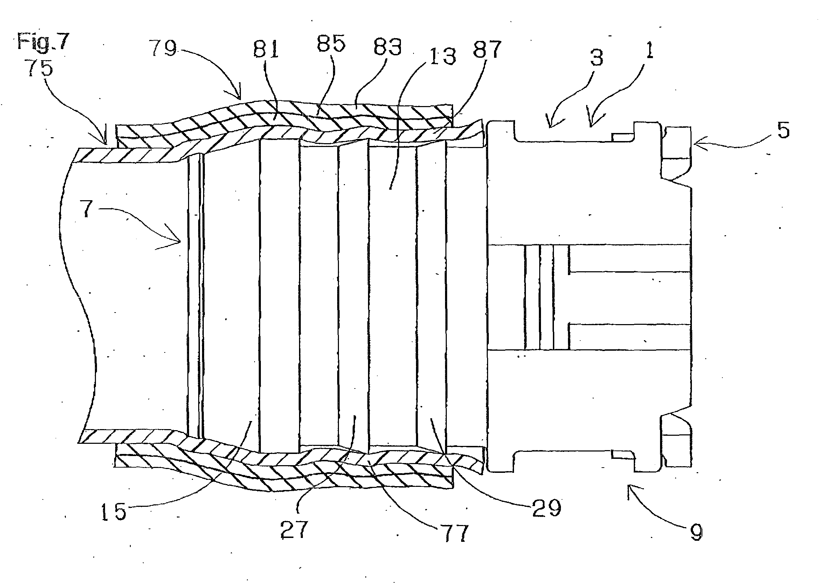

Figure 6 is a diagram illustrating how a resin tube is connected to the connecting portion 7 of the quick connector 1. Figure 7 is a diagram illustrating the resin tube integrated assembly of the present invention.

Resin tube 75 to be connected to tube connecting portion 7 of quick connector 1 is given an outer diameter of 34.5 mm and a thickness of 1.4 mm, and is constructed with a 0.5 mm thick denatured ETFE inner layer and a 0.9 mm PA outer layer containing plastic by 5 weight %, thereby providing a stacked layered structure.

To connect a resin tube 75 to the connecting portion 7 of the quick connector 1, a band of vulcanized rubber (hereafter "rubber band") 79 is fitted to the outer circumference at one end 77 of the resin tube 75 in advance (hereafter "connecting end") of resin tube 75. The inner diameter of the connecting end 77 of resin tube 75 is smaller than the outer diameter of cylindrical circumference 13 of tube connecting portion 7 and is also somewhat smaller than the outer diameter of cylindrical bushing 35 at the first end. The rubber band 79 has a plural layered structure comprising: a 2.0 mm thick weather, i.e., humidity, resistant EPDM inner layer 81; a 2.0 mm EPDM outer layer 83; and a reinforcing layer 85 of PA 66 threads blade-knitted between inner layer 81 and outer layer 83 so that a band is formed which is somewhat longer than the tube connecting portion 7 and will project from the first end 37 of cylindrical bushing 35. The rubber band 79 has a length larger than the diameter of the tube connecting portion at the outer circumference 13 of between 1 to 1.2 times the tube diameter. For the example shown the band length is between 38 mm and 46 mm and has a diameter of 34.5 mm, and a thickness of 4.8 mm. The rubber band 79 is meshed with the outer circumference about the connecting end 77 of resin tube 75 such that the second end thereof (back end in the shaft direction) is positioned at the connecting end 77 to leave the resin tube 75 with a short exposed free end 87 of e.g. 5 mm in length. Reinforcing layer 85 may be made of canvas clot h.

The connecting end 77 of resin tube 75 is fitted with the rubber band 79 before the connecting end 77 is enlarged. The connecting end 77 is enlarged by pushing a tapered surface of a flared push plug 89 against the inner surface of connecting end 77 at the opening end thereof such that its inner diameter becomes 5 - 20 % larger than the outer diameter of cylindrical outer circumference 13 of tube connecting portion 7. The open end at the connecting end 77 is enlarged to the extent that it looks like a funnel, where enlargement begins at the first end rather than the second end of rubber band 79: enlargement of the open end at the connecting end 77 results in enlargement of the second (back) end of the rubber band 79 adjacent the free end 87 of resin tube 75. The flare punch plug 89 inserted into connecting end 77 and then withdrawn so that the tube connecting portion 7 of the of quick connector 1 can be immediately pushed into the connecting end 77 of the resin tube 75. In this way, the open end at the connecting end 77 quickly shrinks and is pressed against the outer circumference of the tube connecting portion 7 with the assistance of the rubber band 79. The connecting end 77 of resin tube 75 is thus pushed against the outer circumference of tube connecting portion 7. Note that the flared punch plug 89 may be molded for use as a heating member such that it can heat the opening in the connecting end 77 of resin tube 75 to make it soft.

As illustrated in Figure 7, the first end (tip in the shaft direction) of the rubber band 79 extends to the edge adjacent the first end of cylindrical bushing 35 of the tube connecting portion 7. When the tube connecting portion 7 is press fitted into the resin tube 75 the resin tube 75 may vibrates or may slide with respect to the quick connector 1. This is minimized by leaving a distance between the rubber band 79 and the first end 37 of tube connecting portion 7 in a range of between 5.0 - 15.0 mm (e.g. 10 mm).

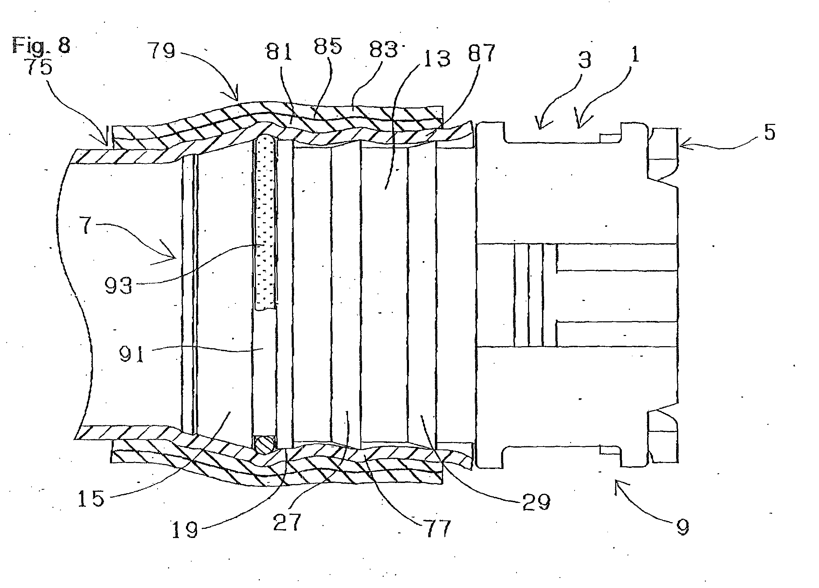

An annular channel 91 may be provided on the annularstopper 15 at the first end of tube connecting portion 7 and a FVMQ O-ring 93 may be fitted to annular channel 91 to seal the linkage between the stopper 15 and the resin tube 75 as illustrated in Figure 8. Alternately, an FKMQ O-ring 93 may be used for the tube. Figure 8 is a diagram illustrating a second embodiment for connecting quick connector 1 to resin tube 75 utilizing O-ring 93.

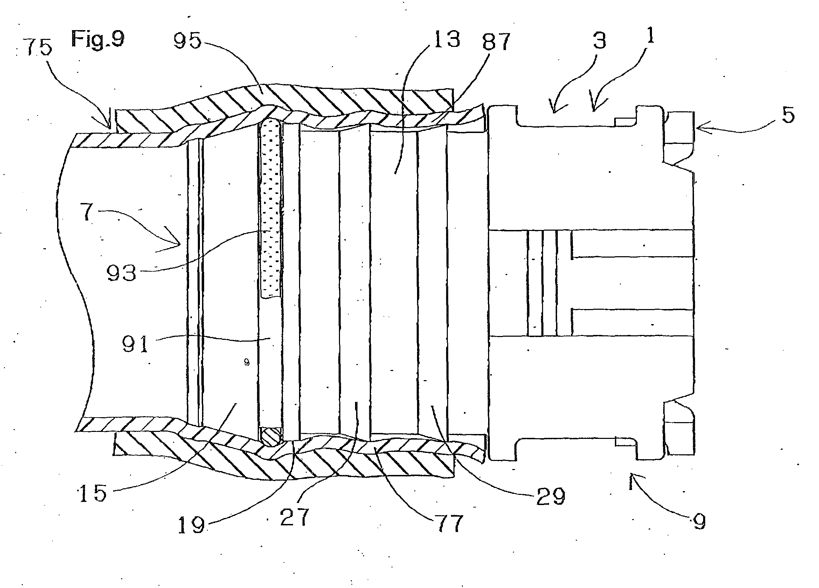

In place of rubber band 79, a rubber band 95 may be used having a single EPDM layer of hardness 7 Mohs which is 40 mm long with an inner diameter of 34.5 mm and a thickness of 5.0 mm. The rubber band 95 is fitted to the outer circumference of the connecting end 77 of resin tube 75 in the same manner as was rubber band 79. Figure 9 is a diagram illustrating a third embodiment in which the quick connector 1 has the O-ring 93 placed around tube connecting portion 7 before being connected to resin tube 75 with rubber band 95. Alternately, the quick connector may be used without O-ring 93.

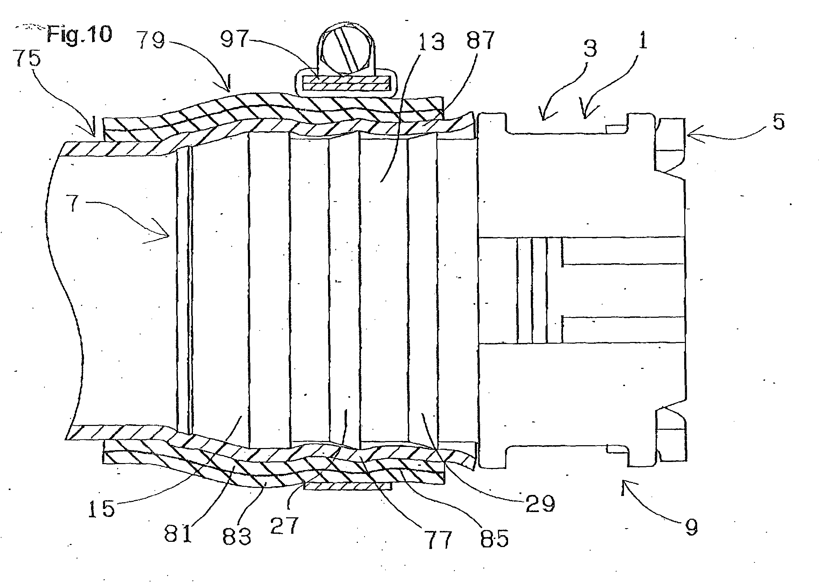

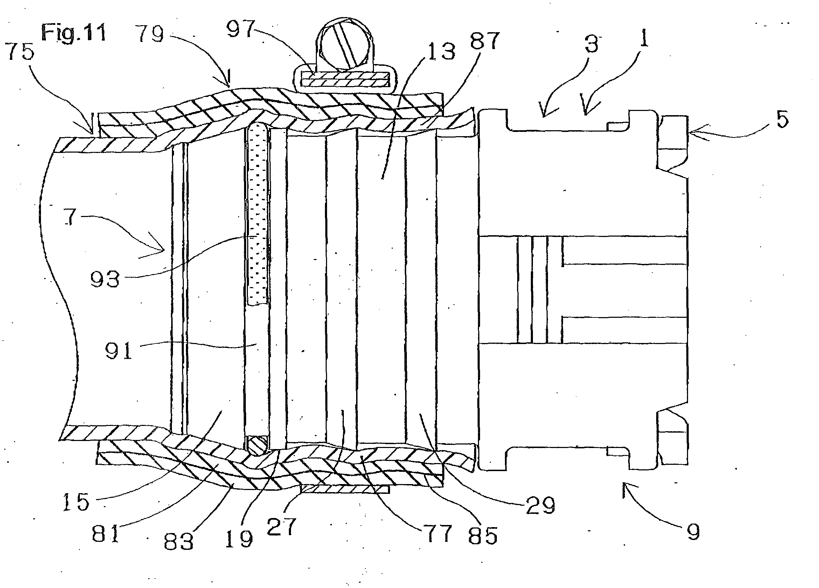

Alternately, the outer circumference of rubber band 79 or rubber band 95 may be tightened by a clamping means. Figure 10 is a diagram illustrating an embodiment utilizing a clamping means, specifically the screw type metallic band 97 having a screw at a longitudinal mid point where stopper 27 is provide d on the outer circumference of the rubber band 79. Figure 11 employs a screw type metallic band 97 which enhances tightening the mid point where stopper 27 is provided on the outer circumference of rubber band 79. The screw type metallic band 97 may be used with or without an O-ring 93. Alternately, a spring type band may be used for the clamping means. Typically, a clamping means is fitted, for example, to resin tube 75 prior to press fitting such that it is tightened after tube connecting portion 7 is press fitted into connecting end portion 77 of resin tube 75 at the connecting end.

Next, the function of the annular stopper(s) used in the embodiments 1-5 will be described.

Connector 1 of Comparative Structure 1 was tested without the rubber band 79 tightly fitted therein, and quick connector 1 of Comparative Structure 2 was tested with O-ring 93 fitted to resin tube 75 without a rubber band tightened. The initial pressure resistance and the load required for resin tube 75 to come off were measured. In addition, resin tube 75 was heated at 100 °C for 480 hours and its pressure resistance after aging (hereinafter referred to as the "post aging pressure resistance") by heat was measured. The results are illustrated in Tables 1 and 2.

The quick connector 1 was connected to resin tube 75, in a pressurizing apparatus for test purposes and water was then pumped through the quic k connector 1 and resin tube 75. The water pressure was increased at 7 MPa / min. until the resin tube 75 burst, when the water pressure was confirmed. The confirmed pressure was determined to be the initial pressure resistance. The destruction mode of resin tube 75 was also visually inspected. Further, the load required for causing disintegration was measured utilizing a strogr aph V-10B manufactured by Toyosei ki wherein the quick connector 1 was fixed thereto and the resin tube 75 was pulled at 500 mm / min. until it came off. The load at which resin tube 75 came off was determined to be the load that caused disintegration thereof. The post aging pressur e resistance for resin tube 75 was measured in the same manner as the initial pressure resistance was measured.

**Table 1**

| | Example 1 | Example 2 | Examp le 3 | Example 4 | Examp le 5 |
|---|---|---|---|---|---|
| Initial pressure resistance (MPa) Resin tube destruction mode | 1.3 Disintegration | 1.5 Disintegration | 2.3 Breakage | 1.4 Disintegration | 2.2 Breakage |
| Load causing disintegration (kN) | 1.5 | 1.6 | 2.5 | 1.7 | 2.4 |
| Post aging pressure resistance (MPa) Resin tube destruction mode | 1.5 Disintegration | 1.6 Disintegration | 2.5 Breakage | 1.6 Disintegration | 2.6 Breakage |

**Table 2**

| | Comparative Example 1 | Comparative Example 2 |
|---|---|---|
| Initial pressure resistance (MPa) Resin tube destruction mode | 0.7 Disintegration | 1.0 Disintegration |
| Load causing disintegration (kN) | 0.6 | 1.1 |
| Post aging pressure resistance (MPa) Resin tube destruction mode | 0.4 Disintegration | 0.8 Disintegration |

The integrated structures (hereinafter referred to as "Examples") 1 - 5 provided good sealing performance for the quick connector 1 and resin tube 75 in all categories, specifically, the initial pressure resistance, the load required for causing disintegration, and the post aging pressure resistance. In the Comparative Structures (hereinafter referred to as the "Comparative Examples") 1 and 2, the post aging pressure resistance is lower than the initial pressure resistance. However, in Examples 1-5, the post aging pressure resistance is higher than the initial pressure resistance. It is inferred that in the integrated structures of Comparative Examples 1 and 2, the tightening stress mitigates at connecting end portion 77 of tube connecting portion 7 of resin tube 75; in the integrated structures of Examples 1-5, the connecting end 77 of the resin tube 75 was softened by heating so that it conforms to the peaks and valleys of tube connecting portion with the assistance of tightening of connecting end 77 utilizing the rubber band 79. Examples 1, 2, 4, and 5 demonstrated nearly identical performance in all categories, specifically, initial pressure resistance, load required for causing disintegration, and post aging pressure resistance. Rubber bands 79 and 95, having good pressure resistance, thus, provide excellent sealing performance even though a highly gasoline or fluid resistant but expensive O-ring 93 is not provided to tube connecting portion 7 of quick connector 1. Elimination of O-ring 93 provides advantages including (1) reduction in manufacturing cost of a quick connector; (2) elimination of the enlargement step for connecting end portion 77 of resin tube 75, which is required for preventing O-ring 93 from damage during press fitting; and (3) elimination of a thin portion at the connecting end of connecting end portion 77 thereof, which makes O-ring 93 susceptible to breakage. In addition, even if O-ring 93 is used in Examples 1, 2, 4, and 5, and is damaged, these structures prevent resin tube 75 from fluid leakage by taking advantage of the complete coverage of O-ring 93 by resin tube 75.

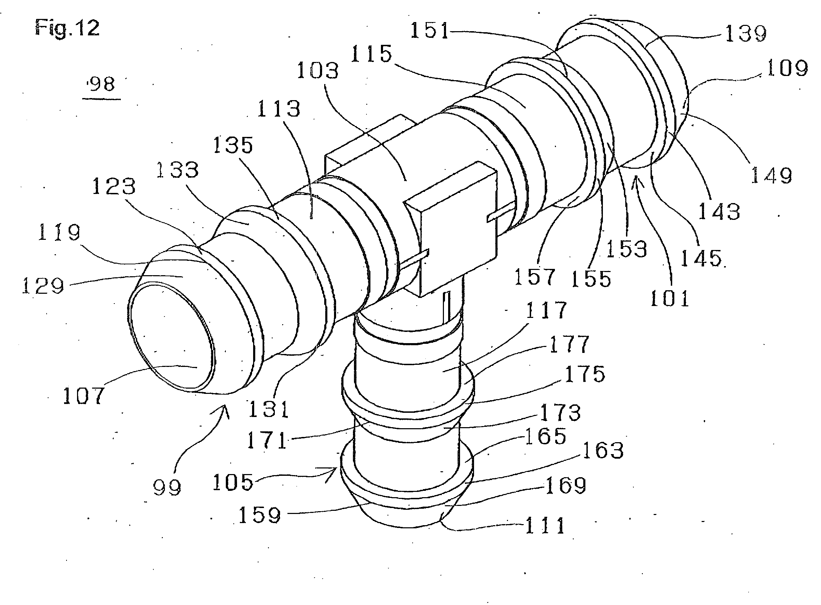

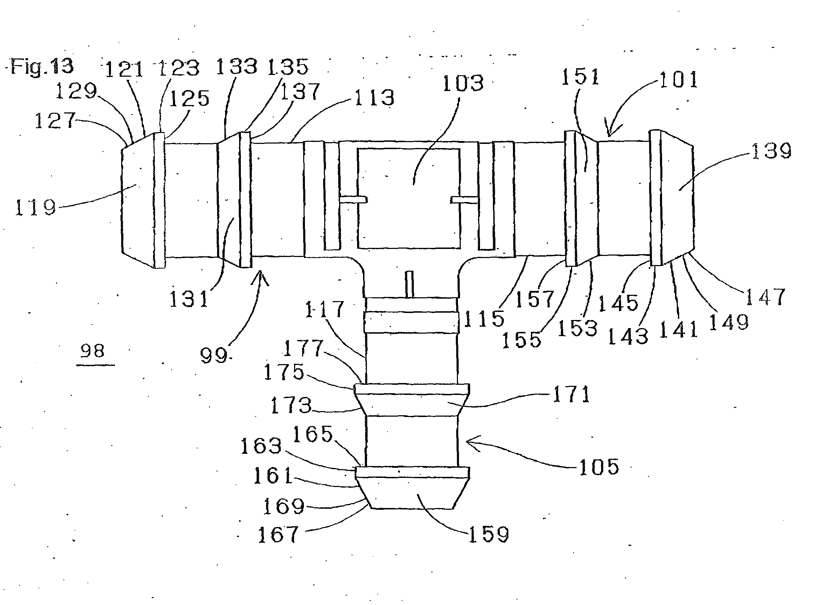

Figure 12 is a perspective view of a T-connector 97 adopted for the integrated structure of another embodiment of the present invention. Figure 13 is a p lan view of the T-connector 97.

T-connector 97 finds applications in automotive heating systems for example. Being made of reinforced Nylon 66 (PA 66 GF 30) containing 30 weig ht % glass fiber, T-connector 97 is integrally formed with: a cylindrical first tube connecting portion 99 (tube connecting portion) at the first end; a cylindrical second tube connecting portion 101 (tube connecting portion) at the second end; a joint 103 provided between first tube connecting portion 99 and second tube connecting portion; and a cylindrical third tube connecting portion 105 (tube connecting portion) connected to joint 103 in such a manner that third tube connecting portion 105 is perpendicular to the plane that is parallel to the shaft direction of first tube connecting portion 99 and second tube connecting portion 101. Through holes 107, 109, and 111 of each first tube connecting portion 99, second tube connecting portion 101, and third tube connecting portion 105 merge into joint 103.

Cylindrical outer circumference 113 of first tube connecting portion 99, cylindrical outer circumference 115 of second tube connecting portion 101, and cylindrical outer circumference 117 of third tube connecting portion 105 each have two annular stoppers in the shaft direction putting a space therebetween, wherein the two stoppers stick out by the same or about the same height.

Stopper 119, provided at the first (front) end of cylindrical outer circumferenc e 113 on first tube connecting portion 99, has an outer surface defined by a tapered surface 121 widening from the first end to the second (back) end of cylindrical outer surface 113 of first tube connecting portion 99; a cylindrical surface 123, which is a cylindrical short extension from the second end of tapered surface 121; and a radial surface, which is an extension toward first tube connecting portion 99 in a radial direction. Tapered surface 121 provides a guiding tapered surface 127 utilizing taper edge 129 which continuously widens from the first end toward the second end of first tube connecting portion 99 at a constant angle. The outer diameter of the first end (tip) of guiding tapered surface 129 is smaller than that of cylindrical outer circumference 113 of first tube connecting portion 99. Stopper 131, provided at the second end, has an outer surface defined by a tapered surface 133 widening from the cylindrical outer surface 113 toward the second end in a tapered manner; cylindrical surface 135, which is a cylindrical short extension from the second end of tapered surface 133; and a radial surface 137, which is an extension from the second end of cylindrical surface 135 toward cylindrical outer circumference 113. Stopper 139, provided at the second end of cylindrical outer circumference 101 of second tube connecting portion101, has an outer surface defined by a tapered surface 141 widening from the second end of cylindrical outer circumference 115 of second tube connecting portion 101 to the firs t (back) end; a cylindrical surface 143, which is a cylindrical short extension from the first end of tapered surface 141; and a radial surface 145, which is an extension from the first end of cylindrical surface 143 to cylindrical outer circumference 115 in a radial direction. Tapered surface 141 provides a guiding tapered surface 149 utilizing taper edge 147 which continuously widens from the second end of second tube connecting portion 101 at a constant angle. The outer diameter of the first end (tip) of guiding tapered surface 149 is smaller than that of cylindrical outer circumference 115 of second tube connecting portion 101. Stopper 151 at the second end has an outer surface defined by a tapered surface 153 continuously widening from cylindrical outer circumference 115 toward the first end in a tapered manner; a cylindrical surface 155, which is a cylindrical short extension from the first end of tapered surface 153; and a radial surface 157, which is an extension from the first end of cylindrical surface 155 to cylindrical outer circumference 115 in a radius direction. Stopper 159, provided at the tip of cylindrical outer circumference 117 of third tube connecting portion 105, has an outer surface defined by a tapered surface 161 continuously widening from the tip of cylindrical outer surface 117 of third tube connecting portion 105 to the back end; a cylindrical surface 163, which is a cylindrical short extension from the back end of tapered surface 161; and a radial surface 165, which is an extension from the back end of cylindrical surface 163 to cylindrical outer circumference 117 in a radial direction. Tapered surface 161 provides a guiding tapered surface 169 utilizing taper edge 167 which continuously widens from the tip of third tube connecting portion 105 toward the back end thereof at a constant angle. The outer diameter at the tip of guiding tapered surface 169 is smaller than that of cylindrical outer circumference 117 of third tube connecting portion 105. Stopper 171, provided at the back of cylindrical outer circumference 117 on third tube connecting portion 105, has an outer surface defined by a tapered surface 173 widening from cylindrical outer circumference 117 toward the back end in a tapered manner; a cylindrical surface 175, which is a cylindrical short extension from the back end of tapered surface 173; and a radial surface 177, which is an extension from the back end of cylindrical surface 175 to cylindrical outer circumference 117 in a radial direction.

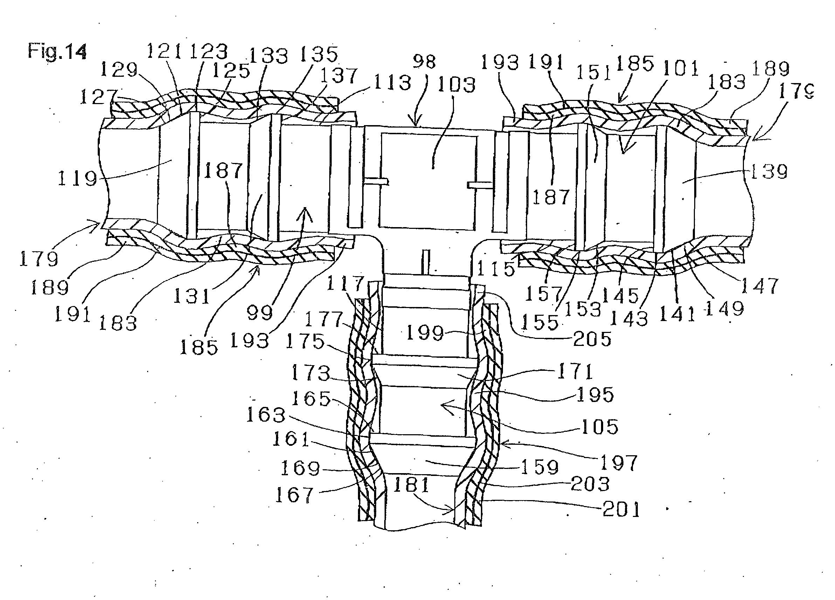

Figure 14 is a diagram illustrating the connection structure of the resin tube of another embodiment of the present invention.

Each of first tube connection portion 99 and second tube connection portion 101 of T-connector 97 is 30 mm long and has an inner diameter of 15 mm. Annular stoppers 119, 131, 139, and151 have a maximum diameter of 21 mm. Third tube connecting portion 105 is 30 mm long and has an inner diameter of 11 mm. Annular stoppers 159, 171 have a maximum diameter of 17 mm. Each of first tube connecting portion 99, second tube connecting portion 101, and third tube connecting portion 105 is connected to a resin tube. Resin tube 179 to be connected to first tube connecting portion 99 and second tube connecting portion 101 has an outer diameter of 18 mm and a thickness of 1.5 mm, and has a stacked layer structure comprising: a 0.7 mm thick polypropylene (PP) inner layer; a 0.7 mm thick PA 12 outer layer containing 5 weight % plastic; and a 0.1 mm thick acid denatured PP middle layer. Resin tube 181 to be connected to third tube connecting portion 105 has an outer diameter of 14.4 mm and a thickness of 1.2 mm, and has a stacked layer structure comprising: a 0.5 mm thick PP inner layer; a 0.6 mm thick PA 12 outer layer containing 5 weight % plastic; and a 0.1 mm thick acid den atured PP middle layer.

When resin tube 179 is connected to first tube connection portion 99 and second tube connecting portion 101 of T-connector 97, vulcanized rubber band 185 is fitted to the outer circumference of connecting end 183 of resin tube 179 in advance. The inner diameter of connecting end 183 of resin tube 179 is smaller than the outer diameter of cylindrical outer circumferences 113, 115 of first tube connecting portion 99 and second tube connecting portion 101, and somewhat smaller than the outer diameter of first tube connecting portion 99 and second tube connecting portion 101, or that of the tip of guiding tapered surface 129, 149. Rubber band 185 has a stacked structure comprising: a 1.5 mm thick weather (sic, humidity) resistant EPDM inner layer 187; a 1.5 mm thick EPDM outer layer 189; and a 1.5 mm inner layer 187; and a 1.5 mm reinforcing layer 191 of blade -knitted PA 66 threads being sandwiched between inner layer 187 and outer layer 189 to make a band 40 mm long (somewhat longer than first tube connecting portion 99 and second tube connecting portion 101) having an inner diameter of 18 mm, and a thickness of 3.6 mm. Rubber band 185 is further fitted to the connecting end 183 of resin tube 179 such that the back end thereof is po sitioned somewhat before the open end of connecting end 183. For this reason, open end portion 193 of connecting end 183 of resin tube 179 is exposed by 5.0 mm, for example. In the same manner, resin tube 181 is connected to third tube connecting portion 105 of T-connector 97; vulcanized rubber band 197 is fitted to the outer circumference of connecting end 195 of resin tube 181 in advance. The inner diameter at connecting end 195 of resin tube 181 is smaller than the outer diameter of cylindrical outer circumference 117 of third tube connecting portion105 and somewhat smaller than the outer diameter of third tube connecting portion 105 or the outer diameter of the tip of guiding tapered surface 169. Rubber band 197 has a stacked structure comprising: a 1.5 mm thick weather (sic, humidity) resistant EPDM inner layer 199; a 1.5 mm thick EPDM outer layer 201; and a 1.5 mm inner layer 199; and a 1.5 mm reinforcing layer 203 of blade-knitted PA 66 threads being sandwiched between inner layer 199 and outer layer 201 to make a band 40 mm long (somewhat longer than third tube connecting portion 103) having an inner diameter of 15 mm and a thickness of 3.6 mm. Rubber band 197 is further fitted to connecting end 195 of the outer circumference of resin tube 181 such that the back end is positioned somewhat before the open end of connecting end 195. For this reason, open end portion 205 at connecting end 195 of resin tube 181 is exposed by 5.0 mm, for example. The reinforcing layer 203 may be made of a canvas cloth.

Resin tubes 179, 181 are connected to first tube connecting portion 99, second tube connecting portion 101, and third tube connecting portion 105 at the outer circumference being locked therein in the same manner as quick connector 1 and resin tube 77. The longitudinal tip of rubber band 185, 197 are extended to a point somewhat before or outside the tip of first tube connecting portion 99, second tube connecting portion 101, and third tube connecting portion 105 to touch the outer circumference of resin tube 179, 181 whose diameter is enlarged before the tip thereof. The space between the first end (tip) of rubber band 185 and the first end of first tube connecting portion 99, and the first end of second tube connecting portion 101 is within a range of 5.0 mm - 15 mm (e.g. 10 mm). The space between the tip of rubber band 197 and the tip of third tube connecting portion 105 is also within a range of 5.0 mm - 15 mm (e.g. 10 mm). In place of rubber band 185, 197, another EPDM single layer (hardness 70 Hs) rubber band of 40 mm long having an inner diameter of 18 mm and a thickness of 4.0 mm with excellent weather (sic, humidity) resistance may be used. Alternately, a rubber band of 40 mm long having an inner diameter of 18 mm and a thickness of 4.0 mm may be used.

Rubber band 185, 197 may be tightened at the outer circumference utilizing a clamp means such as a spring type metallic band or a screw type metallic band.

The outer circumferences of resin tubes 179, 181 are pressed against peaks and valleys of fir st tube connecting portion 99, second tube connection portion 101, and third tube connection portion 105 at the point of use, causing conformation to the structure of this embodiment. T-connector tube 97 and resin tube 179, 181 are thus sealed very well. The resin tube connecting structure of finds applications in water system piping as well.

### ADVANTAGEOUS EFFECTS OF THE INVENTION

As described above, the connecting structure or method for a resin tube of the present invention provides a thin and light weight resin tube with excellent disintegration resistance and sealing performance in a cost effective manner, which is suited to high temperature and high pressure fluid applications.

### REFERENCE SYMBOLS

1 quick connector
7, 99,101, 105 tube connecting portion
13, 113, 115, 117 cylindrical outer circumference
15, 27, 29, 119, 131, 139, 151, 159, 171 stopper
75, 179, 181 resin tube (thermoplastic resin tube)
77, 183, 195 connecting end
79, 95, 185, 197 rubber band (rubber resilient band)
97 T-connector

## Claims

1. A connecting structure for affixing an open end of a tube composed from thermoplastic resin material(s) to a tube connecting portion of a quick connector having a cylindrical geometry and at least one annular stopper on the cylindrical oute r circumference thereof with said tube connecting portion being adapted to be press fitted into said open end of said resin tube; said connecting structure comprising:
an annular band composed of elastomeric rubber surrounding the open end of said resin tube adjacent the location of attachment to said quick connector, said annular rubber band having a length equal to about at least the diameter of said cylindrical outer circumference and a diameter such that a tightening force is applied to said resin tube upon press fitting said tube connecting portion into the open end of said resin tube to prevent disengagement therefrom with said annular rubber band being formed of a plurality of elastomeric rubber layers.

2. The connecting structure as set forth in Claim 1 wherein said annular rubber band has one end thereof displaced from said open end of resin tube into which the tube connecting portion is press fitted to form an exposed free end of resin tube.

3. The connecting structure as set forth in Claim 1 wherein the rubber band is of a length such that the end of said rubber band disposed opposite said open end of said resin tube extends longitudinally beyond the end of the tube connecting portion upon being press fitted into said resin tube.

4. The connecting structure as set forth in Claim 2 wherein the opposite end of said rubber band extends longitudinally beyond the end of the tube connecting portion upon being press fitted into said resin tube.

5. The connecting structure as set forth in Claim 4 wherein said annular rubber band includes a reinforcing layer composed of reinforcing threads or of canvas cloth.

6. The resin tube connecting structure as set forth in Claim 1 further comprising a clamping means for further tightening of said annular rubber band.

7. The resin tube connecting structure as set forth in Claim 4 further comprising a clamping means for further tightening of said annular rubber band.

8. An integrated assembly comprising: a fluid tube connector having a tube connecting portion of cylindrical geometry and an annular stopper on the cylindrical outer circumference thereof; a thermoplastic resin tube, having an open end through which the tube connecting portion of said fluid tube connector is p ress fitted to form a tight coupling; and an annular rubber band fitted to the outer circumference of the open end of said resin tube, said annular rubber band having a length equal to about at least the diameter of said cylindrical outer circumference and a diameter such that a tightening force is applied to said resin tube adjacent at the open end into which said tube connecting portion has been press fitting to prevent disengagement therefrom.

9. An integrated assembly as set forth in Claim 8 wherein said annular rubber band has one end thereof displaced from the connecting end of the resin tube into which the tube connecting portion is press fitted to form an exposed free end of resin tube.

10. An integrated assembly as set forth in Claim 9 wherein said annular rubber band is of a length such that the opposite end thereof extends longitudinally beyond the end of the tube connecting portion press fitted into said resin tube.

11. An integrated assembly as set forth in Claim 8 wherein said annular rubber band comprises a plurality of layers including a reinforcing layer formed from threads or canvas cloth.

12. An integrated assembly as set forth in Claim 10 further comprising a clamping means for further tightening of said annular rubber band.

13. A method for connecting an open end of a resin tube to a tube connecting portion of a quick connector having a cylindrical geometry and an annular stopper on the cylindrical outer circumference thereof, comprising the steps of :
inserting said tube connecting portion into said open end of said resin tube to form a tight coupling; and
placing an annular rubber band over said resin tube at said open end thereof for tightening said coupling, said annular band having a length being at least about equal to the diameter of said cylindrical outer circumference and a diameter such that a tightening force is applied to said resin tube at said press fitted end to prevent disengagement.

14. A method as defined in Claim 12 wherein said open end of said resin tube has a diameter smaller than the diameter of said outer circumference of said tube connecting portion and further comprising the steps of:
enlarging the diameter of said open end of said resin tube before press fitting said tube connecting portion therein;
press fitting said tube connecting portion into the enlarged open end of said resin tube; and
heat-softening said enlarged open end of said resin tube before, during or after press fitting said tube connecting portion utilizing the tightening force of said rubber band.

15. The method as set forth in Claim 14 wherein the open end of said resin tube is softened by heating said resin tube at the point of enlargement.

16. The method as set forth in Claim 13 wherein said annular rubber band has one end displaced back from the open end of said resin tube exposing a free end of resin tube when press fitting said tube connecting portion into said open end.

17. The method as set forth in Claim 13 wherein said annular rubber band is of a length such that the end of said rubber band disposed opposite said open end of said resin tube is displaced longitudinally beyond the end of the tube connecting portion when press fitting said tube connecting portion into said openend.

18. The method as set forth in Claim 16 wherein said annular rubber band is of a length such that the opposite end thereof is displaced longitudinally beyond the end of the tube connecting portion press fitted into said resin tube.
